# EUROPÄISCHE PATENTSCHRIFT

(11) **EP 1 540 897 B1**
(45) Veröffentlichungstag und Bekanntmachung des Hinweises auf die Patenterteilung: **15.08.2007**
(21) Anmeldenummer: 03757833.3
(22) Anmeldetag: 13.09.2003
(51) Int. Cl.: H04L 12/56

(54) **VERFAHREN UND SYSTEM ZUR BESTIMMUNG DER TOPOLOGIE EINES MODULAREN ANALYSE-SYSTEMS**
METHOD AND SYSTEM FOR DETERMINING THE TOPOLOGY OF A MODULAR ANALYSIS SYSTEM
PROCEDE ET SYSTEME POUR DETERMINER LA TOPOLOGIE D'UN SYSTEME D'ANALYSE MODULAIRE

(30) Priorität: 14.09.2002 DE 10242784
(43) Veröffentlichungstag der Anmeldung: 15.06.2005
(73) Patentinhaber: Roche Diagnostics GmbH, 68305 Mannheim (DE); F.HOFFMANN-LA ROCHE AG, 4070 Basel (CH)
(72) Erfinder: ACKERMANN, Friedrich, 69117 Heidelberg (DE); ABEL, Guido, 68535 Edingen (DE); MANSER, Udo, 68723 Schwetzingen (DE); SCHABBACH, Michael, 69469 Weinheim (DE); AUGSTEIN, Manfred, 68305 Mannheim (DE)
(74) Vertreter: Silber, Anton
(86) Internationale Anmeldenummer: PCT/EP2003/010205
(87) Internationale Veröffentlichungsnummer: WO 2004/028081

(56) Entgegenhaltungen:
- US-A- 5 628 027
- US-A- 5 737 319
- US-B1- 6 330 229

## Beschreibung

Die Erfindung betrifft ein Verfahren sowie ein System, mittels derer die Topologie eines modularen Analysesystems bestimmt werden kann.

Mit Hilfe des erfindungsgemäßen Verfahrens kann dem Benutzer eines modularen Analysesystem die Topologie des Systems beispielsweise graphisch auf einem Bildschirm dargestellt werden. Unter einem modularem Analysesystem im Sinne der Erfindung versteht man hierbei ein System, das sich aus einer Mehrzahl von Geräten, die direkt oder indirekt miteinander in Verbindung stehen, zusammensetzt. Weiterhin ist unter dem Begriff Topologie eines Analysesystems im Sinne der Erfindung eine relative räumliche Anordnung der Module zueinander zu verstehen, die jedoch keine absoluten geometrischen Informationen beinhaltet.

Dem Benutzer wird mit dem erfindungsgemäßen Verfahren eine räumliche Zuordnung von Module ermöglicht, ohne hierfür aufwendige Bedienungsschritte vornehmen zu müssen. Dem Benutzer, der sich bei der Bedienung des Systems selbst vor der Zentraleinheit befindet, wird hierfür die relative Anordnung der Module zu der Zentraleinheit und damit zu seiner eigenen Position mitgeteilt. Der Benutzer kann somit leicht erkennen, welche Module im Analysesystem vorhanden und mit der Zentraleinheit kontaktiert sind. Der Benutzer erhält folglich schnell einen Überblick über das Analysesystem und kann dieses für seinen Bedarf durch Hinzufügen oder Wegnehmen von Modulen anpassen. Ausgehend von seiner eigenen Position wird dem Benutzer mitgeteilt, dass sich z. B. Modul 1, ein Blutzuckermessgerät, rechts von ihm neben der Zentraleinheit befindet. Durch diese topologische Information über die jeweiligen Module, wird die Bedienung eines modularen Analysesystems erheblich erleichtert, sodass bei der Bedienung insbesondere von aufwendigen Analysesystemen das erfindungsgemäße Verfahren erhebliche Vorteile bietet und auch häufig wechselnden Benutzern eine einfache Handhabung gewährleistet wird. Das erfindungsgemäße Verfahren und System erweist sich besonders bei Gerätesystemen, die eine Vielzahl von Modulen beinhalten, als sinnvoll, da der Benutzer hier insbesondere auf ein übersichtliches Handling angewiesen ist.

Gerätesysteme, die eine Vielzahl von Modulen beinhalten, kommen häufig bei maßgeschneiderten Analysesystemen zum Einsatz, die auf ein jeweiliges Anwendungsgebiet abgestimmt werden. Einige Anwendungsbereiche, die ein maßgeschneidertes Anforderungsprofil erfordern, liegen z. B. in dem Gebiet der Medizin und Diagnostik. In diesen Gebieten werden oftmals hoch spezialisierte Analysegeräte verwendet, die hohen Anforderungen genügen müssen. Aufgrund der spezifische Leistungsmerkmale, die die Analysegeräte aufweisen, kann die erforderte Vielzahl an Anforderungen an ein Analysesystem häufig nicht von einem Analysegerät alleine bewältigt werden. Weiterhin sind neben den Analysegeräten häufig zusätzliche Geräte notwendig, die zur Verarbeitung und Ausgabe von Daten verwendet werden.

Wird ein modulares Analysesystem z. B. zur Analyse verschiedener Krankheitsbilder eingesetzt, müssen in Abhängigkeit von dem Krankheitsbild unterschiedliche Parameter ermittelt werden, so dass sich aufgrund des Anwendungsgebietes unterschiedliche Anforderungen an das Analysesystem ergeben. Des weiteren zeigt sich, dass die Herstellung spezifischer Geräte, die in derartigen Analysesystemen verwendet werden, aufwendig und teuer ist, sodass eine möglichst hohe Auslastung der Geräte angestrebt wird. Dies hat zur Folge, dass der Einsatz eines Analysegerätes für mehrere Systeme vorgesehen werden muss und die Anzahl und Art der Analysegeräte in einem modularen Analysesystem varüeren. Es ist deshalb wünschenswert, ein Analysesystem im Hinblick auf ein Anwendungsgebiet jeweils leicht zu optimieren und anhand mehrerer Analysegeräte zusammenstellen zu können. So können beispielhaft Analysegeräte, die nicht bei Standardanalysen benötigt werden, bei Bedarf zum Analysesystem hinzugefügt oder entfernt werden. Die flexible Verwendung von Analysegeräten in einem System ermöglicht somit nicht nur eine angepasste Lösung im Hinblick auf das jeweilige Anwendungsgebiet, sondern auch eine verbesserte Auslastung von Geräten. Die Bereitstellung hoch spezialisierter Analysesysteme kann somit kostenoptimiert gewährleistet werden. Weiterhin kann eine zentrale Steuerung des Analysesystems zusätzlich Kosten vermeiden, da z. B. Elemente der Benutzeroberfläche (Bildschirme, Lautsprecher, Drucker etc.) nicht mehr für jedes einzelne Analysegerät zur Verfügung stehen müssen. Eine zentrale Steuerung stellt hierfür einen Kontakt der Elemente zu den jeweiligen Modul bereit.

Um eine einfache Handhabung modularer Analysesysteme für den Benutzer zu ermöglichen, werden im Stand der Technik mehrere Verfahren sowie Systeme dargestellt. Hierbei werden häufig mit Hilfe einer zentralen Steuereinheit Verfahren bereitgestellt, die es erlauben, eine relative Anordnung der Einzelmodule zu der zentralen Steuereinheit - wie beschrieben- zu bestimmen. Der Benutzer wird somit von der sonst not-wendigen Handlung befreit, die Module sowie ihre Verbindung mit der Zentraleinheit visuell zu ordnen und diese relative Anordnung dem System zu nennen. Besonders bei Analysesystemen, in denen häufig ein Austausch von Modulen stattfindet und die von unterschiedlichen Benutzern bedient werden, würde ein visuelles Ordnen der relativen Anordnung der Module sowie die jeweilige Eingabe in die Steuereinheit ein aufwendiges und zeitintensives Verfahren bedeuten. Die Voraussetzung, die an moderne modulare Analysesysteme gestellt wird, leicht und flexibel handhabbar zu sein, wäre mittels eines visuellen Verfahrens maßgeblich behindert.

Im Stand der Technik wird im Dokument US 5,404,460 ein Verfahren zur Bestimmung der relativen Anordnung von Modulen beschrieben. Hierbei offenbart das Dokument ein System, bei dem mehrere Module in Serie geschaltet werden, so dass jeweils der Ausgang eines Moduls an den Eingang des nächsten Moduls angeschlossen ist. Der Ausgang des letzten Moduls wird an einen seriellen Eingang eines zentralen Controllers angeschlossen. Das System weist für alle Module eine gemeinsame Uhr- und eine gemeinsame Reset-Leitung auf. Durch ein systemseitigen Reset und einer anschließenden zentralen Taktung wird ein zeitlich genau spezifisches Lesen und Beschreiben der seriellen Busse ermöglicht. Hierbei erzeugt das erste Modul bei dem systemseitigen Reset ein Datenpaket und weist sich dabei selbst eine Adresse (0) zu. Im Takt wird nun dieses Datenpaket vom ersten bis zum letzten Modul und anschließend an den zentralen Controller weitergereicht, wobei jedes Modul den Paketinhalt um ein Datenpaket (+1) erhöht und sich die entsprechende Adresse zuweist. Als Ergebnis erhält der zentrale Controller Informationen über Anzahl und Reihenfolge der Module im Gesamtsystem. Mit dem Datenpaket, das einer jeweiligen Adresse entspricht, können auch weitere Daten an den zentralen Controller übermittelt werden, die z. B. eine Typbezeichnung des Moduls beinhaltet. Mittels einer Anzeige der Reihenfolge der Module kann somit eine einfachere Identifizierung der Module z. B. über die Typbezeichnung erfolgen, so dass dem Benutzer eine Zuordnung erleichtert wird. Ein entscheidender Nachteil dieses Verfahrens ist, dass die Adressenzuweisung jeweils nur über ein Reset des Gesamtsystems erfolgen kann. Weiterhin ergeben sich Anforderungen an das System, jeweils eine Leitung für ein systemseitiges Reset sowie eine Uhrenleitung aufzuweisen. Ein schwerwiegender Nachteil ist weiterhin, dass das System auf eine ganz bestimmte zeitliche Taktung seines seriellen Busses angewiesen ist. Im Sinne eines OSI-Schichtenmodells, welches nachfolgend noch erläutert wird, trifft es damit Festlegungen auf eine Bitübertragungsschicht seines Protokolls. Damit ist die Freiheit des Benutzers, Industriestandardprotokolle einzusetzen, empfindlich eingeschränkt, da insbesondere industriestandardisierte Busse mit einem derartigen Verfahren inkompatibel sind. Ein weitverbreiteter serieller Bus in der Industrie ist z. B. der CAN-Bus. Diese speziellen seriellen Busse enthalten kleine Datenpakete und sind somit besonders robust im Vergleich zu herkömmlichen seriellen Bussen. Eine Informationsübertragung erfolgt bei diesen Bussen auf Protokollebene des OSI-Schichtmodels. Auf dieser Ebene ist jedoch keine Adresse frei wählbar. Das Verfahren kann somit nicht bei Modulen, die standardmäßig mit CAN-Bussen ausgestattet sind, angewendet werden.

Ein weiteres Verfahren zur Topologiebestimmung wird in dem Dokument WO 02/04675 beschrieben. Dieses Verfahren ähnelt dem bereits beschriebenen Verfahren, da ein Datenpaket mit einer Adressinformation von Modul zu Modul über einen seriellen Bus weitergeleitet wird. Die erforderliche Synchronisation erfolgt über eine separate Kontrollleitung. Hieraus ergeben sich, wie bereits beschrieben, Nachteile des Standes der Technik, da das Verfahren inkompatibel mit Industriestandards ist, um eine Spezifikation des Protokolls zu erreichen. Weiterhin ist auch hier eine zusätzliche Leitung notwendig.

Der Erfindung liegt die Aufgabe zugrunde, ein Verfahren sowie ein System bereitzustellen, das automatisch eine Topologiebestimmung von Modulen in einem Analysesystem ermöglicht, wobei die beschriebenen Nachteile des Standes der Technik vermieden werden sollen.

Die Erfindung beinhaltet ein Verfahren zur Bestimmung der Topologie von Modulen in einem modularen Analysesystem mit folgenden Schritten. Zunächst erfolgt eine Kontaktierung mehrerer Module, die Daten in einem Speicher speichern, mit einer Zentraleinheit, wobei zumindest zwei der Module in Reihe geschaltet sind. Hierbei ist z. B. eine lineare Anordnung der Module zur Zentraleinheit denkbar. Es ist jedoch z. B. eine Sterntopologie mit einer Zentraleinheit als Zentrum ebenfalls möglich. Nach der Kontaktierung der Module mit der Zentraleinheit werden die Daten der Module, die direkt oder indirekt mit der Zentraleinheit kontaktiert sind, an die Zentraleinheit übermittelt und vorteilhafterweise dort registriert. Zunächst wird gezielt ein Kontakt zwischen einem Modul und der Zentraleinheit unterbrochen. Es erfolgt erneut eine Übermittlung der Moduldaten an die Zentraleinheit. Die Zentraleinheit registriert nun erneut alle Moduldaten. Der unterbrochene Kontakt wird anschließend wiederhergestellt. Durch

Ein weiteres Verfahren zur dynamischen Topologic bestimmung wird in US 5 737 319 beschrieben.

Vergleich der registrierten Daten der Module vor und nach der Unterbrechung des Kontaktes kann die Topologie der Module ermittelt werden. Hierbei besteht die Möglichkeit, den Kontakt zu einem weiteren Modul zu unterbrechen und die entsprechenden Verfahrensschritte zu wiederholen, bis durch den Vergleich der registrierten Daten vor und nach der Unterbrechung eines jeweiligen Kontaktes hinreichend Informationen vorhanden sind, um eine Berechnung der Topologie zu leisten.

Die Erfindung beinhaltet weiterhin ein modulares Analysesystem mit einer Zentraleinheit, die mit mehreren Modulen in Kontakt steht. Hierbei sind zumindest zwei der Module in Reihe geschaltet. Die Module weisen jeweils einen Speicher auf zum Speichern von Daten. Das Analysesystem beinhaltet weiterhin einen Schalter, der mit einer Computereinheit kontaktiert ist und von dieser in der Weise gesteuert werden kann, dass der Kontakt zwischen einem Modul und der Zentraleinheit unterbrochen und wiederhergestellt werden kann. Die Computereinheit beinhaltet hierfür eine Steuereinheit zur Steuerung des Schalters sowie einen Speicher zur Registrierung von Moduldaten. Mittels einer Berechnungseinheit wird die Topologie des Analysesystems berechnet. Hierbei werden die registrierten Daten vor und nach einem unterbrochenen Kontakt zwischen der Zentraleinheit und einem Modul verglichen.

Die Erfindung löst die oben gestellte Aufgabe mittels des dargestellten Systems mit geeigneter elektronischer Schaltung sowie eines entsprechenden Verfahrens, in dem die Zentraleinheit auf eine relative Anordnung der Einzelmodule schließen kann. Dabei ist das System und das Verfahren kompatibel mit Industriestandards, wie z. B. CAN-Bussen, und kann somit bei handelsüblichen Systemen problemlos eingesetzt werden. Aufgrund des verwendeten Verfahrens ist keine Adressenzuweisung mittels serieller Busse notwendig, bei denen ein Reset des Systems erforderlich ist. Der Benutzer kann folglich das Verfahren bei handelsüblichen Systemen leicht integrieren, ohne dass sich aufwendige zusätzliche Maßnahmen ergeben.

Das erfindungsgemäße System und Verfahren bietet die Vorteile, ein modulares Analysesystems mit hoher Flexibilität bereitzustellen, so dass z. B. zu jedem beliebigen Zeitpunkt Einzelmodule aus dem Analysesystem herausgenommen oder hinzugefügt werden können. Da die Durchführung des Verfahrens kein Systemreset erfordert, kann das Verfahren folglich auch im laufenden Betrieb und nicht nur während einer speziellen Initialisierungssequenz eingesetzt werden. Das erfindungsgemäße System und Verfahren erlaubt somit, die relative Anordnung einzelner Module automatisch zu berechnen und diese vorteilhafterweise in geeigneter Form einen Benutzer zu visualisieren. Es unterstützt hiermit die Anforderung z. B. an modular aufgebaute Medizingeräte, die einen "plug and play" Handhabung anstreben. Der Ausdruck "plug and play" bedeutet hierbei unter anderem, dass nach Hinzu- oder Wegnahme eines Moduls kein Reset des Gesamtsystems erforderlich ist.

Die in einem Modul gespeicherten Daten können beliebige Informationen beinhalten, so dass das Verfahren auf keine Art von Daten oder Informationen beschränkt ist. Vorteilhafterweise enthalten die Daten Informationen, die eine Identifikation eines Moduls, z. B. als Glucosemessgerät, zulässt.

Im Sinne der Erfindung sind weiterhin vielfältige Möglichkeiten denkbar, die eine Datenübermittelung zwischen Modul und Zentraleinheit beeinflussen. Beispielsweise geschieht dieses, indem die Spannungsversorgung oder ein Kommunikationsweg zu einem Modul unterbrochen wird, so dass das Modul bzw. die Kommunikationseinheit eines Moduls nicht mehr länger in Betrieb ist. Eine Übermittlung von Daten an die Zentraleinheit ist dann nur noch zu den Modulen möglich, bei denen die Kommunikationseinheit weiterhin aktiviert ist. Bei einer Reihenschaltung von Modulen wäre dann beispielsweise bei allen Modulen, die, ausgehend von der Zentraleinheit jenseits von dem Modul, zu dem der Kontakt unterbrochen wurde, in Reihe geschaltet sind, keine Kommunikation mit der Zentraleinheit mehr gegeben. Es ist jedoch auch denkbar, dass im geschilderten Beispiel alle Module jenseits des unterbrochenen Kontaktes weiterhin aktiviert sind und eine Kommunikation zu der Zentraleinheit möglich ist. Zur Kennzeichnung und Unterscheidung der Module, die jenseits des unterbrochenen Kontaktes kontaktiert sind, von den übrigen Modulen werden z. B. bei einer Unterbrechung des Kontaktes zusätzliche Daten generiert, durch die die Module im weiteren Verlauf des Verfahrens gekennzeichnet werden. Anhand der generierten Daten, die vorteilhafterweise in dem jeweiligen Modul gespeichert werden, kann dann die Zentraleinheit, wenn sie mit dem Modul kommuniziert, erkennen, dass das Modul von der Zentraleinheit ausgehend jenseits von dem unterbrochenen Kontakt in Reihe geschaltet ist.

Im Sinne der Erfindung ist folglich eine Unterbrechung des Kontaktes zwischen Modul und Zentraleinheit in der Weise gestaltet, dass eine Differenzierung zwischen den Modulen, die von der Zentraleinheit ausgehend jenseits des unterbrochenen Kontaktes in Reihe geschaltet sind, und den verbleibenden Modulen möglich ist.

Dies kann, wie beschrieben, z. B. durch eine Deaktivierung der Spannungsversorgung oder eines Kommunikationsweges verwirklicht werden, oder z. B. durch die Generierung zusätzlicher Daten, die zur Kennzeichnung der Module verwendet werden. Dabei ist es für die Erfindung unerheblich, ob z. B. eine Kennzeichnung oder z. B. eine Deaktivierung der Module erfolgt, die jenseits des unterbrochenen Kontaktes oder auf der der Zentraleinheit zugewandten Seite, diesseits des unterbrochenen Kontaktes in Reihe geschaltet sind.

Zur Verdeutlichung der Erfindung werden nachfolgend beispielhaft einige Vorgänge näher dargestellt.

Im System ist ein in Elektronik und Software realisiertes Kommunikationsprotokoll definiert. Mittels dieses Kommunikationsprotokolls ist es der Zentraleinheit möglich, mit jedem Modul Befehle und Daten auszutauschen. Module und Zentraleinheit werden über logische Adressen, Aᵢ, angesprochen. Da von diesen Adressen nur endlich viele im System vorhanden sind, ist es der Zentraleinheit möglich, über alle Adressen zu iterieren. Jedes Modul, Mᵢ, verfügt dabei über eine Identifikation, Iᵢ. Die Identifikation kann dabei verschiedene Informationen beinhalten. Es kann sich z. B. als hinreichend erweisen, dass die Typbezeichnung eines Moduls die Identifikation wiedergibt. Eine solche Identifikation könnte dann z. B. Blutzucker- oder Koagulationsmessgerät usw. heißen. Sind mehrere Geräte des gleichen Typs in einem Analysesystem vorhanden, sind zur genauen Identifizierung eines Gerätes zusätzliche Identifilcationsmerkmale notwendig. Prinzipiell sind vielfältige Möglichkeiten einer Datenübermittlung vorstellbar, die zur Identifikation eines Moduls verwendet werden können. Dabei können die Daten eine direkte oder indirekte Identifikation eines Moduls ermöglichen. Hierbei ist es z. B. denkbar, dass die übermittelten Daten mittels eines Programms der Zentraleinheit eine Identifikation eines Moduls zulassen. Im Sinne der Erfindung beinhaltet der Begriff Identifikation eines Moduls folglich derartige Daten, aus denen sich mittelbar oder unmittelbar eine Bestimmung eines Moduls herleiten lässt. Die Identifikationsdaten eines Moduls werden in einem nicht flüchtigen Speicher des Moduls gespeichert, so dass die Information über die Identifikation eines Moduls auch nach einer Unterbrechung der Spannungsversorgung noch im Speicher des Moduls vorhanden ist.

Kommunikation und Spannungsversorgung des modularen Systems können leitungsgebunden von der Zentraleinheit ausgehend an die Module gewährleistet werden. Es ist jedoch auch denkbar, dass entweder nur die Kommunikation oder nur die Spannungsversorgung leitungsgebunden ist. Ist ausschließlich die Kommunikation leitungsgebunden, kann die Spannungsversorgung beispielhaft über jeweilige Netzanschlüsse der einzelnen Module ermöglicht werden. Erfolgt die Spannungsversorgung hingegen leitungsgebunden über die Zentraleinheit, ist auch eine drahtlose Kommunikation mit den Modulen vorstellbar. Diese kann beispielhaft über Infrarot-Sender und Empfangssysteme gewährleistet werden. Die einzelnen Module können dann sowohl untereinander als auch mit der Zentraleinheit Informationen vorteilhafterweise leitungsungebunden austauschen.

Das Verfahren erlaubt in einer bevorzugten Ausführungsform aufgrund der Tatsache, dass die Kommunikation oder die Spannungsversorgung leitungsgebunden sind, die Topologie eines Systems besonders einfach zu bestimmen. Hierbei ist zumindest ein Teil der Module in Reihe geschaltet ist. Dies hat zur Folge, dass bei einer Unterbrechung eines Kontaktes zwischen einem Modul und der Zentraleinheit alle Module, die aus Sicht der Zentraleinheit jenseits des Unterbrechungspunktes liegen, von der Zentraleinheit abgekoppelt werden. Die Unterbrechung kann folglich dadurch bewerkstelligt werden, dass die Spannungsversorgung unterbrochen wird und/oder die Kommunikationsleitung. Es sind natürlich auch die Verwendung von leitungsungebundenen Mitteln zur Kontaktierung der Module denkbar, wenn sich dieses gegebenenfalls als sinnvoll erweist. Unter diesen Umständen ist dann sowohl die Spannungsversorgung als auch die Kommunikation leitungsungebunden. Es sollte jedoch darauf geachtet werden, dass eine Reihenschaltung zumindest eines Teils der Module durch geeignete Mittel in der Weise erfolgt, sodass hierdurch eine relative Anordnung der Module zueinander vorbestimmt wird.

Nach dem Einschalten des Analysesystems sind zunächst alle Module aktiv und bereit zur Kommunikation. Mittels der Zentraleinheit werden alle Adressen, die dem System bekannt und vorgegeben sind, überprüft, ob diese sich tatsächlich im Analysesystem befinden. Die Zentraleinheit registriert somit die absolute Anzahl an Modulen, die in einem Analysesystem vorhanden ist, da der Benutzer im ausgeschalteten Zustand des Analysesystems unter Umständen Module entfernt oder hinzugefügt haben kann. Die Zentraleinheit verfügt somit über die Registrierung aller im Analysesysteme vorhandenen Modul zum aktuellen Zeitpunkt sowie über deren Identifikation und gegebenenfalls weiteren Information, die mit der Identifikation übermittelt werden. Die Zentraleinheit gibt dann an das Modul Mᵢ den Befehl, den Kontakt ab dem Modul Mᵢ in der Kette zu unterbrechen, so dass z. B. die Spannungsversorgung ab dem Modul Mᵢ unterbrochen wird. Anschließend wird erneut eine Abfrage der Zentraleinheit an alle noch mit der Zentraleinheit in Verbindung stehenden Module durchgeführt. Die Module, die nach Unterbrechung des Kontaktes noch mit der Zentraleinheit in Verbindung stehen, werden erneut registriert. Das Modul, Mᵢ, zu dem die Spannungsversorgung unterbrochen wurde, befindet sich zu diesem Zeitpunkt nicht mehr in Betrieb, so dass keine Kommunikation mit der Zentraleinheit mehr erfolgen kann. Alle Module, die über das Modul, Mᵢ, mit der Zentraleinheit in Verbindung standen, sind ebenfalls deaktiviert. Sind beispielsweise jedoch weiterhin noch alle Module im System vorhanden, bis auf das Modul, zu dem der Kontakt unterbrochen wurde, so muss es sich bei diesem Modul um ein Endmodul handeln. Unter dem Begriff Endmodul ist dabei im Sinne der Erfindung ein Modul zu verstehen, das nur mit einem weiteren Gerät (Modul oder Zentraleinheit) direkt kontaktiert ist. Die Zentraleinheit kann somit mittels dieser Registrierung direkt die relative Anordnung des Moduls, Mᵢ, im Analysesystem berechnen. Anschließend wird der Kontakt zu allen Modulen wiederhergestellt.

Sind in dem angeführten Beispiel mehr als zwei Module mit der Zentraleinheit kontaktiert, ist die relative Anordnung des zweiten Moduls noch nicht eindeutig bestimmbar. Zur weiteren Bestimmung der Topologie wird erneut ein Kontakt zu einem der weiteren Module unterbrochen und erneut eine Registrierung der noch im System vorhanden Module vorgenommen. Ist nach Unterbrechung dieses Kontaktes beispielsweise keine weitere Kontaktierung der übrigen Module möglich, handelt es sich bei diesem Modul um ein Anfangsmodul, wobei die übrigen Module jenseits von diesem Modul in Reihe geschaltet sind.

Es zeigt sich, dass das Verfahren von linearer Komplexität ist, das heißt, dass die Zahl der notwendigen Schritte zur Zahl der vorhandenen Module proportional ist, um eine relative Anordnung der Module im System vollständig zu berechnen.

Die Durchführung des Verfahrens erfolgt, indem das Kommunikationsprotokoll ausschließlich auf der Ebene des Sitzungs- und Anwendungsprotokolls durchgeführt wird. Dies bedeutet, dass im Sinne eines OSI-Schichtenmodells eine Anwendung nur in den oberen Schichten durchgeführt wird. Das OSI-Schichtenmodell beschreibt ein Protokoll auf den folgenden sieben Ebenen, wobei als unterste Ebene die Ebene 1 bezeichnet wird.

Die erste Ebene ist eine Bitübertragungsschicht, die festlegt, auf welche Weise "rohe" Bits übertragen werden. Auf dieser Ebene werden elektrische und physikalische Gegebenheiten wie z. B. Kabellängen, Widerstände, Pin-Belegungen und Frequenzen fest-gelegt.

Auf der zweiten Ebene erfolgt die Umwandlung von rohen Bits in Daten, z. B. über den Aufbau von Datenpaketen. Diese zweite Ebene wird als Sicherungsschicht bezeichnet.

Des weiteren dient eine Vermittlungsschicht zur Steuerung sowie eine Transportschicht zur Zerlegung größerer Datenmengen in einzelne Datenpakete, sowie zur Identifikation von Datenpaketen und Fehlerhandling bei nicht korrektem Empfang von Datenpaketen.

Die fünfte Ebene wird als Sitzungsschicht bezeichnet und legt den Aufbau, Durchführung und Beendigung einer Kommunikation fest.

In der Darstellungsschicht erfolgt dann die Darstellung und Interpretation der Daten, bevor in der Anwendungsschicht die Funktionalität und Steuerung der Anwendungen, die sich des Protokolls bedienen, festgelegt wird.

Im Sinne des vorstehend beschriebenen OSI-Schichtenmodells erfolgt die Durchführung des Verfahrens ausschließlich auf den Ebenen 5 (Sitzungsschicht) bis 7 (Anwendungsschicht). An die Ebenen 1-4 werden keine Voraussetzungen gestellt.

Im Gegensatz dazu muss zur Durchführung der im Stand der Technik beschriebenen Verfahren eine Übertragung bis auf die unterste Ebene des siebenschichtigen OSI-Schichtenmodells erfolgen (Bitübertragungsschicht). Das erfindungsgemäße Verfahren ist folglich anders als die im Stand der Technik beschriebenen Verfahren, mit gängigen industriestandardisierten Protokolltypen, insbesondere CAN-Bus oder TCP-IP, wie sie im Stand der Technik hinlänglich bekannt sind und z. B. in "Grundlagen der Vernetzung" und "Medizintechnik. Verfahren, Systeme und Informationsverarbeitung", Berlin u.a.: Springer 1997 (S. 601 ff). beschrieben werden, beliebig kombinierbar. Erfolgt eine Reihenschaltung zumindest eines Teils der Module in der Weise, dass hierdurch eine relative Anordnung der Module zueinander vorbestimmt wird, und ist vorteilhafterweise die Kommunikation oder die Spannungsversorgung leitungsgebunden, ist das erfindungsgemäße Verfahren bzw. System leicht anwendbar, ohne dass weitere Anforderungen an das System gestellt werden.

Anhand der nachfolgenden Figuren wird das erfindungsgemäße Verfahren und System näher erläutert. Die Aufführungen sind dabei beispielhaft gewählt, ohne dabei eine einschränkende Bedeutung zu haben.
- Figur 1:: Schematische Darstellung eines modularen Analysesystems
- Figur 2:: Schematische Darstellung der Kontaktierung von Modulen mit der Zentraleinheit in der näheren Anordnung
- Figur 3:: Schematische Darstellung eines Kommunikationsprotokolls (Struktogramm)
- Figur 4:: Bildschirmdarstellung nach Berechnung der Topologie eines Analysesystems für den Benutzer

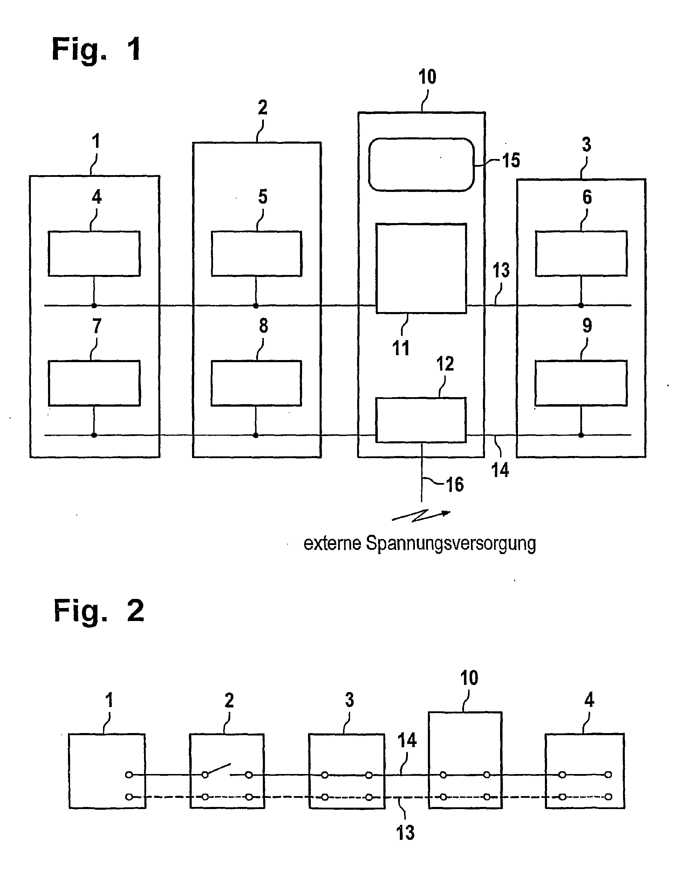

Figur 1 zeigt ein erfindungsgemäßes Analysesystem, das eine Zentraleinheit (10) aufweist, an die drei Module (1, 2, 3) in Reihe angeschlossen sind. Alle drei Module verfügen über eine Kommunikationseinheit (4, 5, 6) und eine Spannungsversorgung (7, 8, 9). Die Kommunikationseinheiten sowie die Spannungsversorgung sind über eine Leitung (13, 14) mit der Kommunikationseinheit (11) sowie der Spannungsversorgung (12) der Zentraleinheit miteinander verbunden. Die Spannungsversorgung (12) ist über eine Leitung (16) an eine externe Spannungsversorgung angeschlossen. Mittels der leitungsgebundenen Verbindung (13) zwischen den Kommunikationseinheiten können die jeweiligen Module Informationen austauschen oder Informationen direkt an die Kommunikationseinheit weiterleiten, in der eine Verarbeitung von Daten stattfindet. So ist es beispielhaft möglich, Analyseprozesse aufeinander abzustimmen. Stehen dabei die Analysegeräte vorteilhafterweise über eine Steckverbindung, wie sie im Stand der Technik aus dem Dokument (DE 10134885.1) bekannt ist, in Verbindung, können in vorteilhafterweise Analyseprozesse sukzessive aufeinander abgestimmt werden. Hierbei beinhaltet die Steckverbindung Leitungen, die einen Probenaustausch zwischen den einzelnen Modulen zulassen. Mittels der Kommunikationseinheit kann somit z. B. Modul (1) die Beendigung einer Analyse an Modul (2) kommunizieren. Die in Modul (1) verwendete Probe wird dann in das Modul (2) weitergeleitet, wobei über die Kommunikationseinheit das Modul (2) den Befehl erhält, eine Analyse zu starten. Bei einer derartigen Verbindung der Module werden dem Benutzer eine Vielzahl von Bedienungsschritten erspart. Nach einer einmaligen Probeneingabe erfolgen sukzessive mehrere Analyseverfahren mittels der zur Verfügung stehenden Module. Nach Beendigung der jeweiligen Analyseverfahren können dem Benutzer auf einem Bildschirm (15) der Zentraleinheit die Analyseergebnisse direkt angezeigt werden. Es ist jedoch auch denkbar, dass mittels der Zentraleinheit eine automatische Verarbeitung der Ergebnisse erfolgt. Bei der Datenverarbeitung sind hierbei vielfältige Möglichkeiten denkbar, die den Benutzer über komfortable Menus eine Datenaufarbeitung erleichtern. In einem derartigen Analysesystem ist beispielhaft ein Modul zur Bestimmung der Blutgaskonzentration, der Gerinnungsfähigkeit des Blutes, der Blutglukose oder zur Bestimmung von Proteinen als Herzinfarktmarker geeignet.

Findet zwischen den Modulen kein Probenaustausch statt, beinhaltet beispielhaft das Modul (1) ein Messgerät zur Bestimmung der Blutglukose, so wie Modul (2) zur Vermessung von Cartridges bei der Bestimmung der Gerinnungsfähigkeit des Blutes. Modul (3) weist einen Blutgasanalysator auf. Bei dem beispielhaft beschriebenen Analysesystem muss dann das Blut entweder auf Streifen bzw. Cartridges jeweils separat aufgegeben werden. Die Testeleniente werden in das jeweilige Messgerät entweder eingeführt oder durch eine spezielle Zangenspritze aufgenommen. Hierbei ist es auch denkbar, dass die Messgeräte selbständig eine Auswertung der Rohwerte vornehmen und diese bis hin zum Laborergebnis aufarbeiten. Die aufgearbeiteten Ergebnisse werden an die Zentraleinheit mitgeteilt und auf dem Bildschirm (15) dem Benutzer zusammenhängend dargestellt.

Zur Bestimmung der Topologie eines Analysesystems wird, wie in Figur 2 dargestellt, der Kontakt zwischen der Zentraleinheit und einem Modul aktiv unterbrochen. Das Gesamtsystem besteht, wie in Figur 2 gezeigt, aus vier Modulen (1 bis 4). Diese Module sind ebenfalls, wie in Figur 1 bereits dargestellt, leitungsgebunden mit der Spannungsversorgung der Zentraleinheit kontaktiert. Die Kommunikation zwischen den Modulen sowie zu der Zentraleinheit erfolgt über den in Figur 2 gestrichelt dargestellten Kommunikationsweg. Dieser kann sowohl leitungsgebunden sein als auch beispielsweise über einen Infrarot-Sender oder andere nicht leitungsgebunden Kommunikationseinheiten stattfinden. Wie in Figur 2 dargestellt, wird mittels Modul (2) über eine aktive Elektronik die Spannungsversorgung zu Modul (1) unterbrochen. Hierzu wird ein Schalter der Spannungsversorgungsleitung in Modul (2) geöffnet. Die Zentraleinheit kann somit nur noch mit den Modulen (2) bis (4) kommunizieren, da Modul (1) deaktiviert ist. Aufgrund der Tatsache, dass ausschließlich Modul (1) nicht mehr von der Zentraleinheit registriert werden kann, wird auf die relative Position von Modul (1) zur Zentraleinheit geschlossen, das im gezeigten Beispiel ein Endmodul ist. Analog ergibt sich bei Unterbrechung der Spannungsversorgung zu Modul (4), dass es sich bei Modul (4) ebenfalls um ein Endmodul handelt. Eine Kommunikation mit Modul (1) bis (3) ist auch nach der Deaktivierung von Modul (4) weiterhin möglich. Eine Unterbrechung der Spannungsversorgung zu Modul (2) mittels eines Schalters in Modul (3) würde hingegen sowohl Modul (2) als auch Modul (1) deaktivieren, so dass die Zentraleinheit hieraus die Information erhält, dass Modul (2) und Modul (1) jenseits von Modul (3) in Reihe geschaltet sein müssen. Durch das beschriebene Verfahren werden folglich hinreichend Informationen an die Zentraleinheit gegeben, um die Topologie des in Figur 2 dargestellten Analysesystems bestimmen zu können. Es zeigt sich, dass durch die Unterbrechung und Wiederherstellung von drei Kontakten die Topologie der vier Module bestimmbar ist.

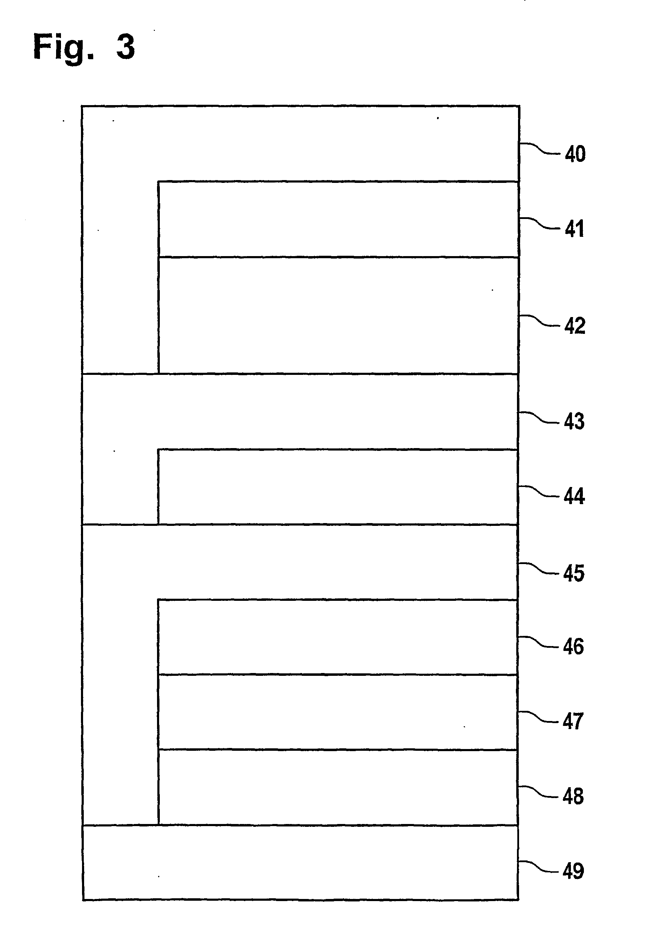

Figur 3 verdeutlicht nochmals die einzelnen Schritte des Kommunikationsprotokolls, die zur Bestimmung der Topologie des Analysesystems geeignet sind. Wird das Analysesystem von dem Benutzer aktiviert, verfügt die Zentraleinheit (1) zunächst über die Information, welche möglichen Module maximal in einem Analysesystem vorhanden sein können. Da die Anzahl der vorhandenen Module je nach Bedarf und Benutzer wechselt, wird zunächst von der Zentraleinheit in der Schleife (40) die Abfrage (41) gestellt, um zunächst die tatsächlich im System vorhandenen Module, noch ohne Berücksichtigung der Topologie, zu ermitteln. Hierbei wird durch die Abfrage (41) die jeweilige Adresse Aᵢ eines Moduls überprüft, ob diese im System vorhanden ist. Die tatsächlich vorhandenen Module antworten in Schritt (42), so dass die Adresse Aᵢ des jeweiligen Moduls Mᵢ registriert wird. Die Abfragen der Schleife (40) werden solange wiederholt, bis alle maximal möglichen Adressen Aᵢ überprüft wurden. In der nachfolgenden Schleife (43) werden alle tatsächlich vorhandenen Module nach ihrer Identifikation Iᵢ gefragt (Schritt 44), so dass z. B. eine Charakterisierung eines Analysesystems als Blutzuckermessgerät möglich ist. Nunmehr kennt die Zentraleinheit alle tatsächlich vorhandenen Module Mᵢ, ihre Adressen Aᵢ und ihre Identifikation Ii. Zur Bestimmung der Topologie der einzelnen Module wird in einer zweiten großen Schleife (45) über alle Adressen der Module iteriert. Die Zentraleinheit fordert die Module über den Schritt (46) jeweils auf, die Verbindung auf ihrer von der Zentraleinheit abgewandten Seite kontaktierten Modul zu unterbrechen. Die Zentraleinheit ermittelt dann mittels einer Abfrage (47), welche Module noch ansprechbar sind, und vergleicht die registrierten Identifikationen vor und nach Unterbrechung eines Kontaktes. Aufgrund dieser Daten kann die Zentraleinheit sukzessive die relative räumliche Position aller vorhandenen Module mit dem Schritt (48) bestimmen.

Ist die Zentraleinheit beispielsweise in der Mitte eines in Reihe geschalteten modularen Systems angeordnet, ordnet die Zentraleinheit abschließend über den Schritt (49) zu, welcher Ast links bzw. rechts von ihr positioniert ist.

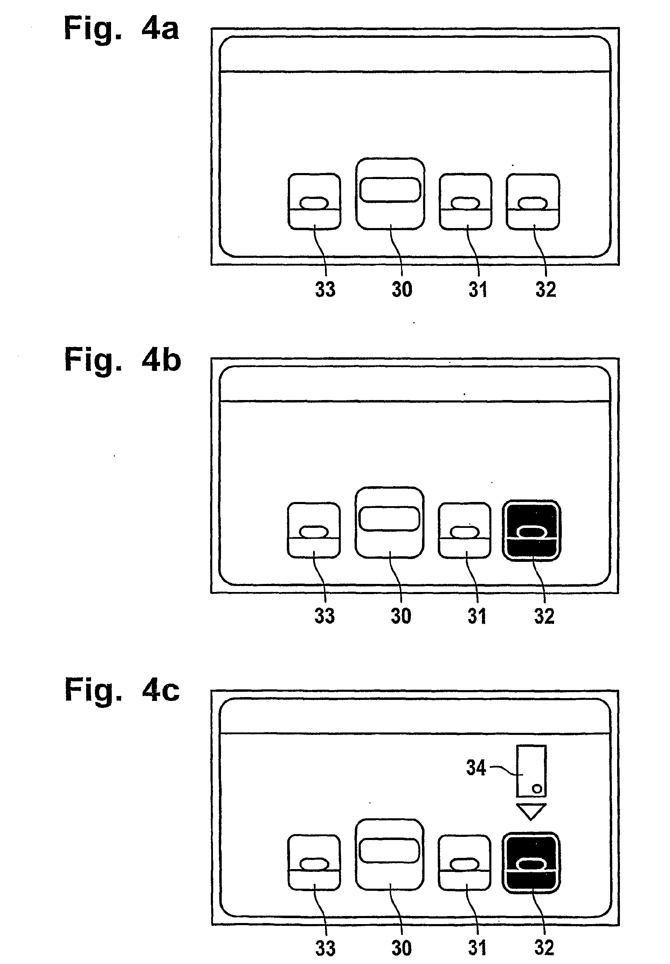

Figur 4 zeigt beispielhaft eine mögliche Bildschirmanzeige, die dem Benutzer die berechnete Topologie des Analysesystems verdeutlicht. Figur 4 a zeigt dem Benutzer relativ zur Zentraleinheit (30), vor der sich der Benutzer befindet, die Position der einzelnen Analysegeräte an. Der Benutzer weiß somit, dass an seiner rechten Seite ein Blutgasanalysator (31) sowie jenseits davon ein Koagulationsmessgerät (32) angeordnet ist. Links von der Zentraleinheit befindet sich ein Blutzuckermessgerät (33). Dem Benutzer wird somit die Handhabung des Analysesystems erheblich vereinfacht und eine schnelle Bedienung ermöglicht. In Figur 4b und 4 c werden weitere zusätzliche Anwendungsmöglichkeiten beispielhaft dargestellt, die aufgrund des erfindungsgemäßen Verfahrens bzw. Systems leicht integriert werden können. So ist es z. B. möglich, mittels der Zentraleinheit dem Benutzer Anweisungen zur Bedienung des Analysesystems zu vermitteln, wobei auf das zu bedienende Gerät direkt hingewiesen wird. In Figur 4b wird der Benutzer durch die farbliche Hervorhebung oder ein Aufblicken eines Moduls (32) darauf hingewiesen, dass eine Messung in dem Analysegerät durchgeführt wird. Der Benutzer ist somit nicht nur über die Topologie der Module informiert, sondern zusätzlich auch über den Status, in dem sich die Module zum Zeitpunkt befinden. In Figur 4c wird darüber hinaus eine Aufforderung an den Benutzer verbildlicht. Hierbei wird durch einen Pfeil (34) der Benutzer zur weiteren Handlung aufgefordert. Derartige Handlungsanweisungen können natürlich auch in Form einer schriftlichen oder akustischen Nachricht erfolgen. Im gezeigten Beispiel wird der Benutzer zur Probeentnahme oder -einführung nach Beendigung einer Messung angewiesen.

Das System ermöglicht folglich auch für ungeübte Benutzer eine einfache Handhabung. Das erfindungsgemäße System und Verfahren ist dabei insbesondere für Analysesysteme geeignet, in denen häufig unterschiedliche Analysegeräte von verschiedenen Benutzern verwendet werden, da die Bestimmung der Topologie besonders einfach erfolgt, ohne dass ein Reset des Systems notwendig ist.

## Patentansprüche

1. Verfahren zur Bestimmung der Topologie von Modulen in einem modularen Analysesystem mit den Schritten
a) Kontaktierung mehrerer Module, die Daten in einem Speicher speichern, mit einer Zentraleinheit, wobei zumindest zwei Module in Reihe geschaltet sind,
b) Übermitteln der gespeicherten Daten der direkt oder indirekt mit der Zentraleinheit kontaktierten Module an die Zentraleinheit,
c) Unterbrechung eines Kontaktes eines Moduls zu der Zentraleinheit,
d) Erneute Übermitteln der Daten der Module an die Zentraleinheit,
e) Wiederherstellung des unterbrochenen Kontaktes,
f) Vergleichen der Daten, die vor der Unterbrechung des Kontaktes übermittelt wurden mit den Daten, die nach der Unterbrechung des Kontaktes übermittelt wurden und Ermittlung der Topologie des modularen Analysesystems aufgrund des Vergleichs,
wobei eine Wiederholung der Verfahrensschritte c bis e mit mindestens einem weiteren Modul erfolgt, bis hinreichend Informationen aus dem Vergleich zur Berechnung der Topologie vorhanden sind.

2. Verfahren gemäß Anspruch 1,
bei dem die Daten in einem nicht flüchtigen Speicher gespeichert sind.

3. Verfahren gemäß Anspruch 1,
bei dem die Kontaktierung zwischen mehreren Modulen und der Zentraleinheit eine sternförmige Topologie aufweist, und die Zentraleinheit durch gezielte Unterbrechung der Kontakte zu den einzelnen Strahlen des Sternes zwischen diesen diskriminieren kann.

4. Verfahren gemäß Anspruch 1,
bei dem die Kontaktierung zwischen einem Modul und der Zentraleinheit eine linear angeordnete Topologie aufweist.

5. Verfahren gemäß Anspruch 1,
bei dem die Unterbrechung oder Wiederherstellung des Kontaktes zwischen einem Modul und der Zentraleinheit durch die Unterbrechung oder Wiederherstellung einer Kommunikationsleitung erfolgt.

6. Verfahren gemäß Anspruch 1,
bei dem die Unterbrechung oder Wiederherstellung des Kontaktes zwischen einem Modul und der Zentraleinheit durch die Unterbrechung oder Wiederherstellung der Spannungsversorgung erfolgt

7. Verfahren gemäß Anspruch 1,
bei dem die Topologie des Analysesystems graphisch auf einem Bildschirm dargestellt wird.

8. Verfahren gemäß Anspruch 7,
bei dem der Benutzer eine Bedienungsanleitung mitgeteilt bekommt, die auf dem Bildschirm graphisch einem Modul zugeordnet ist.

9. Modulares Analysesystem beinhaltet
- eine Zentraleinheit, die mit mehreren Modulen kontaktiert ist, wobei zumindest zwei der Module in Reihe geschaltet sind, wobei die Module jeweils einen Speicher zum Speichern von Daten beinhalten,
- einen Schalter, der durch eine Computereinheit in der Weise steuerbar ist, dass der Kontakt eines Moduls zu der Zentraleinheit unterbrochen und wieder hergestellt werden kann,
- die Computereinheit beinhaltet,
- eine Steuereinheit zur Steuerung des Schalters,
- einen Speicher zur Registrierung der Daten der Module sowie
- einer Berechnungseinheit zur Berechnung der Topologie des Analysesystems aufgrund eines Vergleichs von Daten, die vor einer Unterbrechung eines Kontaktes zwischen der Zentraleinheit und einem Modul registriert wurden, mit Daten, die nach der Unterbrechung des Kontaktes registriert wurden.

10. Modulares Analysesystem gemäß Anspruch 9,
bei dem ein CAN-Bus verwendet wird.

11. Modulares Analysesystem gemäß Anspruch 9,
bei dem ein TCP/IP als Protokoll eingesetzt wird.

12. Modulares Analysesystem gemäß Anspruch 9,
bei dem die Daten als Identifikation eines Moduls eine Typbezeichnung beinhaltet.

13. Modulares Analysesystem gemäß Anspruch 9,
bei dem die Kontaktierung zwischen einem Modul und der Zentraleinheit leitungsgebunden ist.

14. Modulares Analysesystem gemäß Anspruch 13,
bei dem eine Spannungsversorgung der Module mittels einer Leitung von der Zentraleinheit aus erfolgt.

15. Modulares Analysesystem gemäß Anspruch 13,
bei dem eine Kommunikation zwischen einem Modul und der Zentraleinheit leitungsgebunden ist.

16. Analysesystem gemäß Anspruch 9,
das zur Durchführung des Verfahrens gemäß einem der Ansprüche 1-8 geeignet ist.

## Claims

1. Method for determining the topology of modules in a modular analytical system comprising the steps
a) contacting several modules which store data in a memory with a central unit, where at least two modules are connected in series,
b) transmitting the stored data of the modules that are directly or indirectly contacted with the central unit to the central unit,
c) interrupting a contact of a module to the central unit,
d) again transmitting the data of the modules to the central unit,
e) restoring the interrupted contact,
f) comparing the data that were transmitted before the contact was interrupted with the data that were transmitted after interruption of the contact and determining the topology of the modular analytical system on the basis of the comparison,
wherein the method steps c to e are repeated with at least one other module until sufficient information is available from the comparison to calculate the topology.

2. Method as claimed in claim 1,
in which the data are stored in a permanent memory.

3. Method as claimed in claim 1,
in which the contacting between several modules and the central unit has a star-shaped topology and the central unit can discriminate between the arms of the star by specifically interrupting the contacts to the individual arms.

4. Method as claimed in claim 1,
in which the contacting between a module and the central unit has a linear topology.

5. Method as claimed in claim 1,
in which the contact between a module and the central unit is interrupted or restored by interrupting or restoring a communication line.

6. Method as claimed in claim 1,
in which the contact between a module and the central unit is interrupted or restored by interrupting or restoring the power supply.

7. Method as claimed in 1,
in which the topology of the analytical system is displayed graphically on a screen.

8. Method as claimed in claim 7,
in which operating instructions are communicated to the user which on the screen are graphically allocated to a module.

9. Modular analytical system comprising
- a central unit which is contacted with several modules, where at least two of the modules are connected in series and the modules each comprise a memory to store data,
- a switch which can be controlled by a computer unit in such a manner that the contact of a module to the central unit can be interrupted and restored again,
- the computer unit comprising,
- a control unit to control the switch,
- a memory to register the data of the modules and
- a computing unit to calculate the topology of the analytical system on the basis of a comparison of data that were registered before interrupting a contact between the central unit and a module with data that were registered after interruption of the contact.

10. Modular analytical system as claimed in claim 9,
in which a CAN-bus is used.

11. Modular analytical system as claimed in claim 9,
in which a TCP/IP is used as the protocol.

12. Modular analytical system as claimed in claim 9,
in which the data comprise a type name to identify a module.

13. Modular analytical system as claimed in claim 9,
in which the contact between a module and the central unit is via a line.

14. Modular analytical system as claimed in claim 13,
in which the modules are supplied with power from the central unit via a line.

15. Modular analytical system as claimed in claim 13,
in which the communication between a module and the central unit is via a line.

16. Analytical system as claimed in claim 9,
which is suitable for carrying out the method as claimed in one of the claims 1-8.

## Revendications

1. Procédé pour déterminer la topologie de modules dans un système d'analyse modulaire, ayant les étapes :
a) mise en contact de plusieurs modules, qui mémorisent des données dans une mémoire, avec une unité centrale, au moins deux modules étant montés en série,
b) transmission des données mémorisées des modules mis en contact directement ou indirectement avec l'unité centrale, vers l'unité centrale,
c) interruption d'un contact d'un module avec l'unité centrale,
d) retransmission des données des modules vers l'unité centrale,
e) rétablissement du contact interrompu,
f) comparaison des données qui ont été transmises avant l'interruption du contact, avec les données qui ont été transmises après interruption du contact, et détermination de la topologie du système d'analyse modulaire sur la base de la comparaison, une répétition des étapes de procédé c à e se réalisant avec au moins un module supplémentaire, jusqu'à ce que des informations suffisantes provenant de la comparaison soient disponibles pour calculer la topologie.

2. Procédé selon la revendication 1,
dans lequel les données sont mémorisées dans une mémoire non volatile.

3. Procédé selon la revendication 1,
dans lequel la mise en contact entre plusieurs modules et l'unité centrale présente une topologie en forme d'étoile, et l'unité centrale à l'aide d'une interruption ciblée des contacts avec les rayons individuels de l'étoile, peut faire la distinction entre ceux-ci.

4. Procédé selon la revendication 1,
dans lequel la mise en contact entre un module et l'unité centrale présente une topologie disposée de façon linéaire.

5. Procédé selon la revendication 1,
dans lequel l'interruption o u le rétablissement d u contact entre un module et l'unité centrale se réalise par interruption ou rétablissement d'une ligne de communication.

6. Procédé selon la revendication 1,
dans lequel l'interruption o u le rétablissement du contact entre un module et l'unité centrale se réalise par interruption ou rétablissement de l'alimentation en tension.

7. Procédé selon la revendication 1,
dans lequel la topologie du système d'analyse est représentée graphiquement sur un écran.

8. Procédé selon la revendication 7,
dans lequel un mode d'emploi est communiqué à un utilisateur, lequel mode d'emploi est associé graphiquement à un module sur l'écran.

9. Système d'analyse modulaire contenant
- une unité centrale qui est mise en contact avec plusieurs modules, au moins deux des modules étant montés en série, les modules contenant respectivement une mémoire pour mémoriser des données,
- un interrupteur, qui peut être commandé par une unité informatique de telle façon que le contact d'un module avec l'unité centrale puisse être interrompu et rétabli,
- l'unité informatique contenant,
- une unité de commande pour commander l'interrupteur,
- une mémoire pour enregistrer des données des modules, ainsi que
- une unité de calcul pour calculer la topologie du système d'analyse sur la base d'une comparaison de données qui ont été enregistrées avant une interruption d'un contact entre l'unité centrale et un module, avec des données qui ont été enregistrées après l'interruption du contact.

10. Système d'analyse modulaire selon la revendication 9, dans lequel un bus CAN est employé.

11. Système d'analyse modulaire selon la revendication 9,
dans lequel un TCP/IP est mis en oeuvre en tant que protocole.

12. Système d'analyse modulaire selon la revendication 9,
dans lequel les données contiennent une désignation de type à titre d'identification d'un module.

13. Système d'analyse modulaire selon la revendication 9,
dans lequel la mise en contact entre un module et l'unité centrale est liée à une ligne.

14. Système d'analyse modulaire selon la revendication 13,
dans lequel l'alimentation en tension des modules se réalise au moyen d'une ligne partant de l'unité centrale.

15. Système d'analyse modulaire selon la revendication 13,
dans lequel une communication entre un module et l'unité centrale est liée à une ligne.

16. Système d'analyse modulaire selon la revendication 9,
qui convient à la réalisation du procédé selon l'une quelconque des revendications 1 à 8.
